# EUROPEAN PATENT SPECIFICATION

(11) **EP 1 727 105 B1**
(45) Date of publication and mention of the grant of the patent: **10.09.2008**
(21) Application number: 06114559.5
(22) Date of filing: 25.05.2006
(51) Int. Cl.: G08B 25/08

(54) **Social alarm unit with speech communication**
Sozialalarmeinheit mit Sprachkommunikation
Unité d'alarme sociale avec communication de la parole

(30) Priority: 27.05.2005 GB 0510840
(43) Date of publication of application: 29.11.2006
(73) Proprietor: TUNSTALL GROUP PLC, Yorkshire DN14 0HR (GB)
(72) Inventor: Stone, Richard, Whitley Bridge, Yorkshire DN14 0HR (GB)
(74) Representative: Robinson, Ian Michael

(56) References cited:
- EP-A- 1 521 436
- WO-A-92/14333
- WO-A-99/28882
- US-A- 5 589 818

## Description

The present invention relates to a social alarm unit, a system incorporating the social alarm unit and a method relating thereto.

A social alarm system monitors the safety and wellbeing of a client in their own home or a sheltered housing scheme. Traditionally, the social alarm system comprises a client unit installed in a dwelling and arranged to initiate an alarm call to a remote monitoring station or control centre. In the event of an alarm being triggered, an operator at the control centre may communicate with the client via the client unit.

One of the problems associated with such systems is how to establish communication with the client most effectively.

US-A-5 589 818 discloses a personal response system with remotely adjustable microphone sensitivity. The precharacterising portions of the appended claims are based on this document.

An aim of the present invention is to provide improved communication between a client and a system operator in a social alarm system.

According to the present invention there is provided an apparatus and a method as set forth in the appended claims. Preferred features of the invention will be apparent from the dependent claims, and the description which follows.

According to the present invention there is provided a social alarm unit for enabling a client to communicate with a system operator. The unit is provided with means for receiving at least a first and a second alarm trigger. The unit also comprises a communication channel having at least a first and a second communication mode for enabling communication between the client and the operator. Switching means are arranged to select one of the at least first and second communication modes according to which of the at least first or second alarm triggers is received. The first communication mode optimizes speech communication for a client who is relatively close to the social alarm unit and the second communication mode optimizes speech communication for a client who is relatively remote from the social alarm unit.

The present invention thus provides an improved communication unit, which automatically connects an operator to a client in the most appropriate communication mode. Optionally, the communication mode is subsequently changed (overridden) by the operator, if the mode selected automatically is not appropriate. Advantageously, the communication mode is automatically selected appropriate to an expected location of the client relative to the communication unit.

For a better understanding of the invention, and to show how embodiments of the same may be carried into effect, reference will now be made, by way of example, to the accompanying diagrammatic drawings in which:
Figure 1 is a schematic illustration of a social alarm system in which the present invention is employed;
Figure 2 is a schematic drawing which shows an embodiment of a social alarm system according to the present invention; and
Figure 3 is a state diagram showing events in a social alarm system according to a preferred embodiment of the present invention.

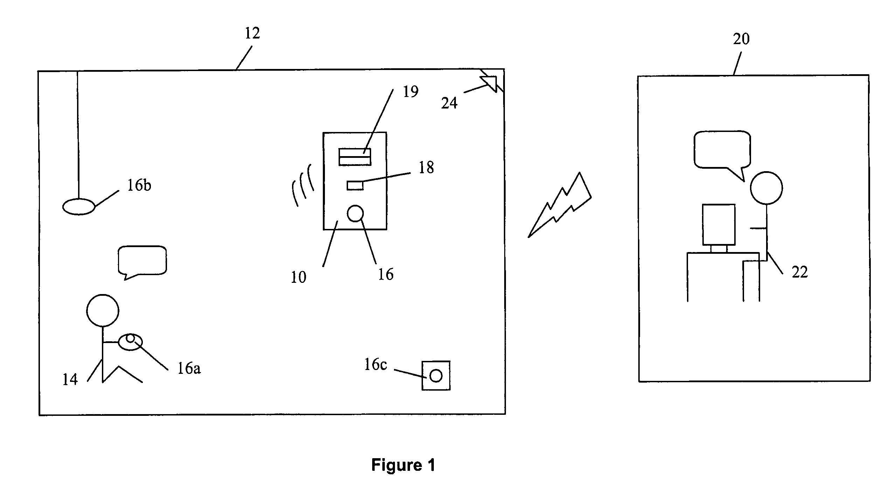

Figure 1 shows the principle components of operation of a preferred social alarm system. A client unit 10 is provided in a room 12 of a client's dwelling. The client unit 10 has an emergency button 16, a microphone 18 and a speaker 19. If the client should require assistance, he can press the button 16. This causes the client unit 10 to raise an alarm call, or other alert status, at a remote monitoring station (system operator unit) 20, preferably by speed dial over a public switched telephone network (PSTN). An audio communication path is established between the monitoring station 20 and the client unit 10, enabling an operator 22 to communicate with the client.

The alarm can be client activated by any other suitable means. For example, the client 14 can wear a push button radio trigger 16a on a belt, in a discreet pouch, or around his neck or wrist. Alternatively the client's home may be provided with pull cords 16b which are particularly useful in bedrooms for use by a client sitting or lying on a bed. Alternatively, the client's rooms may be provided with one or more push buttons 16c fixed to a wall close to floor level, so that they can be operated by the client when sitting or lying on the floor.

Alternatively, the alarm can be automatically generated by any suitable means. For example, an alarm can be generated by a fall detector which is carried by the client 14 and which senses impact and fall angle. An alarm can also be triggered by means of data received from movement sensors 24 in the house. If, for example, no movement of a client is observed from the movement sensors during a predetermined period of time, the alarm will be triggered.

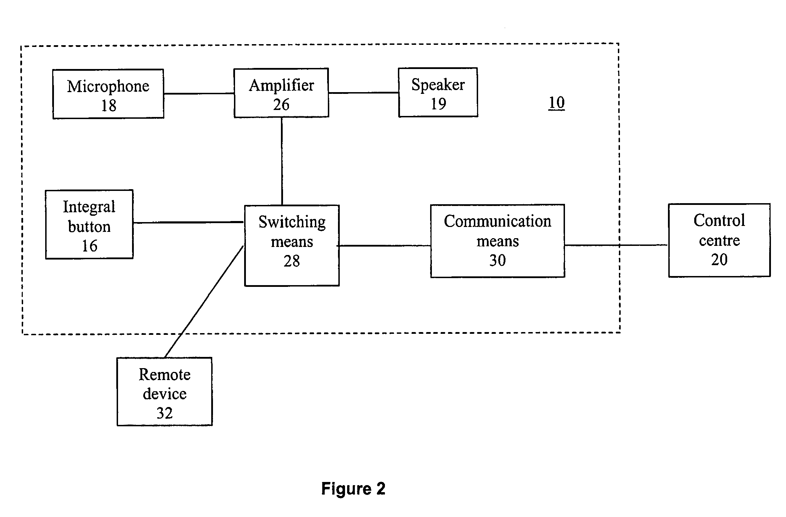

Figure 2 is a schematic illustration of a social alarm system according to the present invention. The client unit 10 comprises the button 16, the microphone 18, the speaker 19, an amplifier 26, a switching unit/trigger unit 28 and a communication unit 30. The communication unit 30 is operable in two modes, preferably a voice switched hands free (HVS) mode and a tone switched half duplex mode.

Tone switched half duplex mode provides good quality speech as only one channel is in use at any given time and thus no feedback occurs. When the operator 22 wishes to switch the direction of speech transmission, he presses a button at the operator unit 20 which initiates the sending of an audible tone pulse to the client unit 10. When the pulse is received by the client unit 10, the direction of speech transmission is switched. This means that the gain of the amplifier 26 can be set relatively high.

In the HVS mode, communication between the parties is switched based on a sound input level. This has the advantage that it gives a more natural speech experience for the client 14 and operator 22, since the direction of transmission is switched automatically based on which party is speaking. However, if the gain is set too high, feedback occurs between the microphone and loudspeaker. To avoid feedback, the speaker volume and microphone sensitivity are lower than can be achieved in the tone switched half duplex mode.

HVS operation is thus more appropriate when the client 14 is physically close to the unit 10, whilst tone switched half duplex mode is more appropriate when the client 14 is further away from the unit 10.

The switching/trigger unit 28 initially selects either the voice switched mode or the tone switched mode according to the source of an alarm call. If the alarm call was raised by the client 14 using the integral button 16, the call starts up in HVS mode. Use of the integral button 16 means that the client 14 is present close to the unit 10. The volume of communication between the client 16 and operator 22 is unlikely to be an issue, and ease of communication is likely to be of greater importance. If the alarm call is raised by a remote device 32, such as by one of the trigger devices 16a, 16b, 16c or 24 of Figure 1, then the unit 10 will start up in the tone-switched mode. The use of a remote device 32 implies that the client is likely to be some distance from the unit 10 and volume of communication between the client 14 and the operator 22 is likely to be more of an issue.

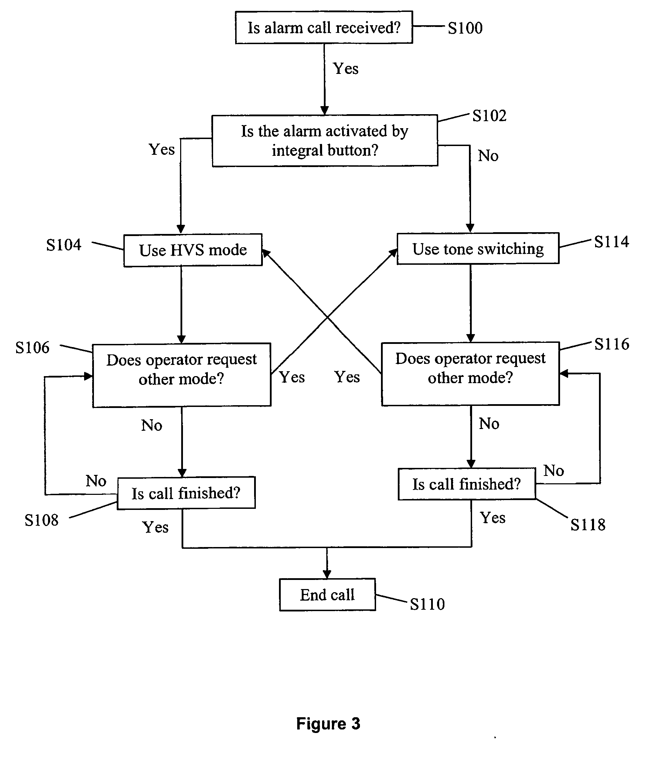

Whichever mode of communication is used initially, the operator 22 in the monitoring station 20 can switch to the other mode of speech if the initial choice was not optimum. This is illustrated in Figure 3, which is a flow diagram of the sequence of events in a social alarm system according to the present invention.

The method of switching the mode of speech in an alarm call will now be described in detail with respect to Figure 3. When an alarm call is received (S100) the origin of the alarm call is determined (S102). If the alarm call originates from the integral button 16 of the client unit 10 then the HVS mode of transmission is selected (S104). This mode may be changed by the operator 22 to tone switching if, for example, the client 14 cannot be heard (S106). The mode may be switched by the operator 22 as often as needed until it is determined that the call is recognised as having finished (s108). If the alarm call originates from a remote device 32, the tone switching mode of transmission is selected (S114). This mode may be changed by the operator 22 to HVS mode if, for example, the client 14 can be heard quite clearly and a more natural conversation is desired (S116). Again, the mode may be switched by the operator 22 as often as needed until the call is recognised as having finished (S118).

Other criteria for choosing a start-up mode may be used. Any suitable device can be used by the client 14 to raise an alarm, and a number of types of alarms may be used in conjunction with a given client unit 10. Furthermore, any suitable mode of communication may be selected as required, such as simplex, half duplex or full duplex. The unit 10 is thus configured to match the type of alarm call received with a preferred type of initial communication, according to the environment in which the unit is used.

The present invention thus provides a social alarm unit 10, whereby an alarm call may be raised to a monitoring unit 20. A speech path is established in a communication mode selected according to the type of device used to trigger the alarm call, allowing the situation to be assessed and the most appropriate action to be taken.

Although a few preferred embodiments have been shown and described, it will be appreciated by those skilled in the art that various changes and modifications might be made without departing from the scope of the invention, as defined in the appended claims.

## Claims

1. A social alarm unit (10) for speech communication between a client and an operator, the social alarm unit (10) comprising:
a trigger unit (28) able to receive at least a first alarm trigger signal from a first trigger device (16) and a second alarm trigger signal from a second trigger device (32);
a communication unit (30) arranged to provide an audio communication path in at least a first communication mode or a second communication mode; and
a switching unit (28) arranged to select the first communication mode in response to the first alarm trigger signal and select the second communication mode in response to the second alarm trigger signal;
**characterised in that:**
the first communication mode optimizes speech communication for a client who is relatively close to the social alarm unit (10) and the second communication mode optimizes speech communication for a client who is relatively remote from the social alarm unit (10).

2. The social alarm unit (10) of claim 1 wherein the communication unit (30) is arranged to initiate a communication channel to provide the audio communication path, where the communication channel is provided initially in the first communication mode or the second communication mode, respectively, as selected by the switching unit (28).

3. The social alarm unit (10) of claim 1 or 2, wherein the communication unit (30) is arranged to establish the audio communication path over a public switched telephone network.

4. The social alarm unit (10) of any preceding claim, wherein the first trigger device (16) is arranged integral with the social alarm unit (10), and the second trigger device (32) is remote from the social alarm unit (10).

5. The social alarm unit (10) of claim 4, wherein the first trigger device (16) is a manual push button.

6. The social alarm unit (10) of claim 4 or 5, wherein the trigger unit (28) receives the second alarm trigger signal from the second trigger device (32), being any of a manually operated wireless trigger, a pull cord, a wall-mounted button, an automatic fall detector, or a movement sensor.

7. The social alarm unit (10) of any preceding claim, further comprising a microphone (18) and a loudspeaker (19), wherein the first communication mode sets a first microphone sensitivity and a first loudspeaker volume and the second communication mode sets a second microphone sensitivity and a second loud speaker volume.

8. The social alarm unit (10) of any preceding claim, wherein the first communication mode and the second communication mode are selected from any of a simplex mode, a half duplex mode or a full duplex mode.

9. The social alarm unit (10) of any preceding claim, wherein the first communication mode is a voice switched half-duplex mode and the second mode is a tone switched half-duplex mode.

10. The social alarm unit (10) of any preceding claim, wherein the switching unit (28) is arranged to receive a command signal to select amongst the first and second communication modes while the audio communication path is established.

11. A social alarm system, comprising:
the social alarm unit (10) of any preceding claim; and
an operator unit (20) arranged to provide the audio communication path to an operator in at least the first mode or second mode, respectively.

12. The social alarm system of claim 11, wherein the client unit (10) and the operator unit (20) are each coupleable to provide the speech communication path over a public switched telephone network.

13. The social alarm system of claim 11 or 12, wherein the operator unit (20) is arranged to generate a command signal which causes the client unit (10) to switch the speech communication path between the first and second communication modes.

14. The social alarm system of any of claims 11 to 13, wherein the first communication mode is a voice switched mode and the second communication mode is a tone switched mode.

15. A method of providing a speech communication path in a social alarm unit (10), the method comprising:
receiving an alarm trigger signal from a first trigger device (16) or a second trigger device (32), and in response providing a speech communication path in a first communication mode or a second communication mode, respectively;
**characterised in that:**
the first communication mode optimizes speech communication for a client who is relatively close to the social alarm unit (10) and the second communication mode optimizes speech communication for a client who is relatively remote from the social alarm unit (10).

## Patentansprüche

1. Sozialalarmeinheit (10) zur Sprachkommunikation zwischen einem Klienten und einem Beamten, wobei die Sozialalarmeinheit (10) folgendes umfaßt:
eine Auslöseeinheit (28), die ein erstes Alarmauslösesignal von einer ersten Auslöseeinrichtung (16) und ein zweites Alarmauslösesignal von einer zweiten Auslöseeinrichtung (32) empfangen kann;
eine Kommunikationseinheit (30), die dafür ausgelegt ist, einen Audiokommunikationsweg in mindestens einem ersten Kommunikationsmodus oder einem zweiten Kommunikationsmodus bereitzustellen; und
eine Schalteinheit (28), die dafür ausgelegt ist, als Reaktion auf das erste Alarmauslösesignal den ersten Kommunikationsmodus auszuwählen und als Reaktion auf das zweite Alarmauslösesignal den zweiten Kommunikationsmodus auszuwählen;
**dadurch gekennzeichnet, daß**
der erste Kommunikationsmodus Sprachkommunikation für einen Klienten optimiert, der der Sozialalarmeinheit (10) relativ nahe ist, und der zweite Kommunikationsmodus Sprachkommunikation für einen Klienten optimiert, der von der Sozialalarmeinheit (10) relativ weit entfernt ist.

2. Sozialalarmeinheit (10) nach Anspruch 1, wobei die Kommunikationseinheit (30) dafür ausgelegt ist, einen Kommunikationskanal einzuleiten, um den Audiokommunikationsweg bereitzustellen, wobei der Kommunikationskanal je nach Auswahl durch die Schalteinheit (28) anfänglich in dem ersten Kommunikationsmodus bzw. dem zweiten Kommunikationsmodus bereitgestellt wird.

3. Sozialalarmeinheit (10) nach Anspruch 1 oder 2, wobei die Kommunikationseinheit (30) dafür ausgelegt ist, den Audiokommunikationsweg über ein öffentliches Fernsprechwählnetz herzustellen.

4. Sozialalarmeinheit (10) nach einem der vorhergehenden Ansprüche, wobei die erste Auslöseeinrichtung (16) integral mit der Sozialalarmeinheit (10) ausgelegt ist und die zweite Auslöseeinrichtung (32) von der Sozialalarmeinheit (10) entfernt ist.

5. Sozialalarmeinheit (10) nach Anspruch 4, wobei die erste Auslöseeinrichtung (16) eine manuelle Drucktaste ist.

6. Sozialalarmeinheit (10) nach Anspruch 4 oder 5, wobei die Auslöseeinheit (28) das zweite Alarmauslösesignal von der zweiten Auslöseeinrichtung (32) empfängt, wobei es sich um etwas beliebiges aus der folgenden Gruppe handeln kann: ein manuell betriebener drahtloser Auslöser, eine Ziehschnur, eine an der Wand angebrachte Taste, ein automatischer Falldetektor oder ein Bewegungssensor.

7. Sozialalarmeinheit (10) nach einem der vorhergehenden Ansprüche, ferner mit einem Mikrophon (18) und einem Lautsprecher (19), wobei der erste Kommunikationsmodus eine erste Mikrophonempfindlichkeit und eine erste Lautsprecherlautstärke einstellt und der zweite Kommunikationsmodus eine zweite Mikrophonempfindlichkeit und eine zweite Lautsprecherlautstärke einstellt.

8. Sozialalarmeinheit (10) nach einem der vorhergehenden Ansprüche, wobei der erste Kommunikationsmodus und der zweite Kommunikationsmodus aus einem beliebigen der folgenden Gruppe ausgewählt werden: ein Simplexmodus, ein Halbduplexmodus oder ein Vollduplexmodus.

9. Sozialalarmeinheit (10) nach einem der vorhergehenden Ansprüche, wobei der erste Kommunikationsmodus ein sprachgeschalteter Halbduplexmodus und der zweite Modus ein tongeschalteter Halbduplexmodus ist.

10. Sozialalarmeinheit (10) nach einem der vorhergehenden Ansprüche, wobei die Schalteinheit (28) dafür ausgelegt ist, ein Befehlssignal zu empfangen, um unter dem ersten und dem zweiten Kommunikationsmodus auszuwählen, während der Audiokommunikationsweg hergestellt wird.

11. Sozialalarmsystem, umfassend:
die Sozialalarmeinheit (10) nach einem der vorhergehenden Ansprüche; und
eine Einheit (20) für den Beamten, die dafür ausgelegt ist, den Audiokommunikationsweg zu einem Beamten mindestens in dem ersten Modus bzw. dem zweiten Modus bereitzustellen.

12. Sozialalarmsystem nach Anspruch 11, wobei die Einheit (10) für den Klienten und die Einheit (20) für den Beamten jeweils koppelbar sind, um den Sprachkommunikationsweg über ein öffentliches Fernsprechwählnetz bereitzustellen.

13. Sozialalarmsystem nach Anspruch 11 oder 12, wobei die Einheit (20) für den Beamten dafür ausgelegt ist, ein Befehlssignal zu erzeugen, das bewirkt, daß die Einheit (10) für den Klienten den Sprachkommunikationsweg zwischen dem ersten und dem zweiten Kommunikationsmodus umschaltet.

14. Sozialalarmsystem nach einem der Ansprüche 11 bis 13, wobei der erste Kommunikationsmodus ein sprachgeschalteter Modus und der zweite Kommunikationsmodus ein tongeschalteter Modus ist.

15. Verfahren zum Bereitstellen eines Sprachkommunikationswegs in einer Sozialalarmeinheit (10) mit den folgenden Schritten:
Empfangen eines Alarmauslösesignals von einer ersten Auslöseeinrichtung (16) oder einer zweiten Auslöseeinrichtung (32) und Bereitstellen eines Sprachkommunikationswegs in einem ersten Kommunikationsmodus bzw. einem zweiten Kommunikationsmodus als Reaktion darauf; **dadurch gekennzeichnet, daß**
der erste Kommunikationsmodus Sprachkommunikation für einen Klienten optimiert, der der Sozialalarmeinheit (10) relativ nahe ist, und der zweite Kommunikationsmodus Sprachkommunikation für einen Klienten optimiert, der von der Sozialalarmeinheit (10) relativ weit entfernt ist.

## Revendications

1. Unité (10) d'alarme sociale destinée à la communication vocale entre un client et un opérateur, l'unité (10) d'alarme sociale comportant :
une unité (28) de déclenchement capable de recevoir au moins un premier signal de déclenchement d'alarme provenant d'un premier dispositif (16) de déclenchement et un deuxième signal de déclenchement d'alarme provenant d'un deuxième dispositif (32) de déclenchement ;
une unité (30) de communication agencée en vue de mettre à disposition une voie de communication audio dans au moins un premier mode de communication ou un deuxième mode de communication ; et
une unité (28) de commutation agencée en vue de sélectionner le premier mode de communication en réaction au premier signal de déclenchement d'alarme et de sélectionner le deuxième mode de communication en réaction au deuxième signal de déclenchement d'alarme ;
**caractérisée en ce que :**
le premier mode de communication optimise la communication vocale pour un client se trouvant relativement près de l'unité (10) d'alarme sociale et
le deuxième mode de communication optimise la communication vocale pour un client se trouvant relativement loin de l'unité (10) d'alarme sociale.

2. Unité (10) d'alarme sociale selon la revendication 1, l'unité (30) de communication étant agencée en vue d'amorcer un canal de communication pour mettre à disposition la voie de communication audio, le canal de communication étant initialement mis à disposition dans le premier mode de communication ou dans le deuxième mode de communication, respectivement, tel que sélectionné par l'unité (28) de commutation.

3. Unité (10) d'alarme sociale selon la revendication 1 ou 2, l'unité (30) de communication étant agencée de façon à établir la voie de communication audio sur un réseau téléphonique public commuté.

4. Unité (10) d'alarme sociale selon l'une quelconque des revendications précédentes, le premier dispositif (16) de déclenchement étant agencé de façon intégrée à l'unité (10) d'alarme sociale et le deuxième dispositif (32) de déclenchement étant éloigné de l'unité (10) d'alarme sociale.

5. Unité (10) d'alarme sociale selon la revendication 4, le premier dispositif (16) de déclenchement étant un bouton-poussoir manuel.

6. Unité (10) d'alarme sociale selon la revendication 4 ou 5, l'unité (28) de déclenchement recevant le deuxième signal de déclenchement d'alarme à partir du deuxième dispositif (32) de déclenchement qui peut être un dispositif quelconque parmi un déclencheur sans fil actionné manuellement, un cordon à tirer, un bouton mural, un détecteur automatique de chute ou un capteur de mouvement.

7. Unité (10) d'alarme sociale selon l'une quelconque des revendications précédentes, comportant en outre un microphone (18) et un haut-parleur (19), le premier mode de communication réglant une première sensibilité du microphone et un premier volume du haut-parleur et le deuxième mode de communication réglant une deuxième sensibilité du microphone et un deuxième volume du haut-parleur.

8. Unité (10) d'alarme sociale selon l'une quelconque des revendications précédentes, le premier mode de communication et le deuxième mode de communication étant sélectionnés de façon quelconque parmi un mode simplex, un mode semi-duplex et un mode duplex intégral.

9. Unité (10) d'alarme sociale selon l'une quelconque des revendications précédentes, le premier mode de communication étant un mode semi-duplex à commutation vocale et le deuxième mode étant un mode semi-duplex à commutation par tonalité.

10. Unité (10) d'alarme sociale selon l'une quelconque des revendications précédentes, l'unité (28) de commutation étant agencée de façon à recevoir un signal de commande afin de sélectionner un mode parmi les premier et deuxième modes de communication pendant que la voie de communication audio est établie.

11. Système d'alarme sociale comportant :
l'unité (10) d'alarme sociale selon l'une quelconque des revendications précédentes ; et
une unité (20) d'opérateur agencée de façon à mettre la voie de communication audio à la disposition d'un opérateur dans au moins le premier mode ou le deuxième mode, respectivement.

12. Système d'alarme sociale selon la revendication 11, chacune parmi l'unité (10) de client et l'unité (20) d'opérateur pouvant être couplée afin de mettre à disposition la voie de communication vocale sur un réseau téléphonique public commuté.

13. Système d'alarme sociale selon la revendication 11 ou 12, l'unité (20) d'opérateur étant agencée de façon à générer un signal de commande amenant l'unité (10) de client à commuter la voie de communication vocale entre les premier et deuxième modes de communication.

14. Système d'alarme sociale selon l'une quelconque des revendications 11 à 13, le premier mode de communication étant un mode à commutation vocale et le deuxième mode de communication étant un mode à commutation par tonalité.

15. Procédé de mise à disposition d'une voie de communication vocale dans une unité (10) d'alarme sociale, le procédé comportant les étapes consistant à :
recevoir un signal de déclenchement d'alarme provenant d'un premier dispositif (16) de déclenchement ou d'un deuxième dispositif (32) de déclenchement et, en réaction, mettre à disposition une voie de communication vocale dans un premier mode de communication ou dans un deuxième mode de communication, respectivement ;
**caractérisé en ce que :**
le premier mode de communication optimise la communication vocale pour un client se trouvant relativement près de l'unité (10) d'alarme sociale et le deuxième mode de communication optimise la communication vocale pour un client se trouvant relativement loin de l'unité (10) d'alarme sociale.
